Europäisches Patentamt

European Patent Office

Office européen des brevets

(19)

(11) Numéro de publication : **0 349 389 B1**

(12) # FASCICULE DE BREVET EUROPEEN

(45) Date de publication du fascicule du brevet :
**19.08.92 Bulletin 92/34**

(51) Int. Cl.$^5$ : **B60J 10/04**

(21) Numéro de dépôt : **89401765.6**

(22) Date de dépôt : **22.06.89**

(54) **Lécheur de bas de glace mobile de véhicule automobile.**

(30) Priorité : **29.06.88 FR 8808728**

(43) Date de publication de la demande :
**03.01.90 Bulletin 90/01**

(45) Mention de la délivrance du brevet :
**19.08.92 Bulletin 92/34**

(84) Etats contractants désignés :
**BE DE ES GB IT LU NL SE**

(56) Documents cités :
**EP-A- 0 021 989
EP-A- 0 070 165
EP-A- 0 200 618
FR-A- 2 468 717
GB-A- 2 127 713**

(73) Titulaire : **HUTCHINSON
2 rue Balzac
F-75008 Paris (FR)**

(72) Inventeur : **Saint Louis Augustin, Guy
4, rue Carnot
F-45200 Montargis (FR)**
Inventeur : **Guillon, Henri
66, Avenue de Paris
F-78740 Vaux S/Seine (FR)**

(74) Mandataire : **Orès, Bernard et al
Cabinet ORES 6, Avenue de Messine
F-75008 Paris (FR)**

EP 0 349 389 B1

Jouve, 18, rue Saint-Denis, 75001 PARIS

## Description

L'invention a pour objet un lécheur de bas de glace mobile de véhicule automobile.

On connaît déjà, dans de nombreuses réalisations, des joints d'étanchéité pour vitre ou glace d'automobile, montés fixes sur le cadre ou châssis de la porte du véhicule qu'ils équipent et désignés sous le nom de "coulisses de glace" lorsqu'ils forment l'encadrement supérieur et latéral de la baie propre à être ouverte ou fermée par ladite glace mobile tandis qu'ils sont désignés sous le nom de "profils d'étanchéité de bas de glace", ou de "lécheurs", lorsqu'ils sont prévus sur le bord inférieur de ladite baie. Si les lécheurs, de même que les coulisses, sont destinés à procurer l'étanchéité requise à l'eau, d'une part, et contribuer à l'isolation phonique, d'autre part, ils n'en ont pas moins des fonctions différentes. Ainsi, alors que les coulisses ont un rôle de guidage et de protection, celui-ci n'est pas requis des lécheurs dont on attend, par contre, qu'ils contribuent à l'aspect esthétique du véhicule, tout en formant une saillie aussi faible que possible par rapport à la baie de la porte.

Pour satisfaire à cette dernière condition, les constructeurs d'automobiles souhaitent que la lèvre d'étanchéité, c'est-à-dire la partie proprement opératoire du lécheur, soit dirigée aussi près que possible de la perpendiculaire à la glace mobile.

Les solutions apportées à ce problème dans l'art antérieur ont abouti à la mise sur le marché de joints d'étanchéité comprenant essentiellement une ou deux lèvres d'étanchéité en caoutchouc naturel ou synthétique, portée(s) par un talon comportant éventuellement une armature, la ou les lèvre(s) s'appliquant en se déformant contre la surface mobile. Voir, par exemple, la figure 1 de EP-A1-0 200 618.

Toutefois, comme l'application d'une telle lèvre contre la vitre a tendance à freiner le coulissement de celle-ci, il a été proposé de recouvrir la surface de la lèvre qui est en contact avec la vitre d'une couche possédant de bonnes propriétés de glissement.

A cet effet, les lèvres d'étanchéité de certains lécheurs ont été revêtues par flocage d'une couche de fibres ou poils textiles formant un revêtement quelque peu analogue à un velours. Si les propriétés de glissement sont améliorées, les lèvres ainsi traitées perdent cependant assez rapidement leurs qualités en raison notamment de leur usure relativement rapide. Ces lèvres ont donc été remplacées par des lèvres revêtues d'un "glissant" présentant une surface continue en polyoléfine, polytétrafluoroéthylène ou autre matériau, généralement en matière synthétique, résistant bien à l'usure par frottement et assurant une bonne étanchéité à l'eau et à l'air, tout en ayant de bonnes propriétés de glissement. Cette solution n'est cependant pas entièrement satisfaisante car elle accentue les risques de rayures des vitres par de la poussière, ce risque étant encore accru du fait du décalage transversal de la vitre au cours de sa manoeuvre résultant du mécanisme de montée et, aussi, sur de nombreux véhicules récents, du bombé des portes et fenêtres.

C'est, par conséquent, un but de l'invention de fournir un lécheur de bas de glace mobile de véhicule automobile de réalisation simple et économique, qui tout en assurant une bonne étanchéité à l'eau et une bonne isolation phonique, n'endommage pas la vitre'ou glace avec laquelle il coopère.

Pour atteindre ce but et résoudre le problème posé, l'invention met à profit le décalage précité qui a pour conséquence, qu'au cours de leur manoeuvre, les vitres coulissantes (supposées coulissant verticalement dans la suite pour fixer les idées) occupent au niveau du lécheur une position qui varie, -par rapport à un plan de référence parallèle au plan d'une porte-, de quelques millimètres avec la hauteur de la partie émergeant de ladite porte.

Le problème est résolu dans un lécheur de bas de glace mobile, notamment de porte d'automobile, comportant un talon ou pince de fixation et de montage sur le cadre ou chassis de porte et une première lèvre d'étanchéité portée par ledit talon et propre à coopérer avec ladite glace ou vitre dont la position varie, -par rapport à un plan de référence parallèle au plan de la porte-, lors du mouvement de ladite glace ou vitre, la première lèvre étant revêtue sur sa partie venant en contact avec la vitre lors du mouvement de cette dernière d'un revêtement à faible coefficient de frottement, ainsi qu'une seconde lèvre revêtue sur sa partie opératoire d'un revêtement glissant et décalée par rapport à la première vers l'extrêmité non libre et non émergente de la glace ou vitre par le fait que, selon l'invention, ladite seconde lèvre est conformée et placée de manière telle qu'elle n'entre en contact avec la vitre ou glace que lorsque celle-ci est complètement relevée, appuyant alors suffisamment sur ladite glace ou vitre pour assurer une étanchéité satisfaisante, et en ce que le revêtement de la première lèvre est un revêtement relativement souple déposé par flocage.

Dans ce lécheur, la lèvre supérieure, floquée, assure l'étanchéité de toute la partie émergente de la vitre durant la manoeuvre de la vitre, la géométrie de cette lèvre étant choisie de manière à ce qu'elle exerce un effort minimum sur la vitre ; elle répond aussi aux exigences d'esthétique et retient les poussières qu'elle empêche de pénétrer dans la porte, tandis que la lèvre inférieure, plus courte ou plus inclinée que la première, ou à la fois plus courte et plus inclinée et revêtue de glissant, n'est en contact avec la vitre que quand celle-ci est relevée, et ne risque donc pas de rayer la partie visible de celle-ci, la distance entre les extrémités des lèvres étant déterminée en fonction dudit décalage pour que la lèvre inférieure n'appuie sur la vitre que lorsqu'elle est complètement relevée, c'est-à-dire qu'elle n'appuie que sur la partie inférieure, non émergente de la vitre. La combinaison de ces deux lèvres, dont l'une est revêtue par flocage et l'autre est revêtue d'un glissant assure donc une bonne étanchéité à l'eau et à l'air sans risque de rayures inesthétiques et avec un effort de coulissement faible.

Dans une réalisation avantageuse, les deux lèvres sont montées sur une pince ou talon en forme générale de π, comportant éventuellement une armature, et muni de griffes d'accrochage du lécheur sur la carrosserie, comme décrit dans EP-A1-0 333 536, déposée le 24-02-89 sous priorité du 01-03-88 et publiée le 20-09-89, la lèvre supérieure étant reliée par sa base à l'âme du talon tandis que la lèvre inférieure est reliée par sa base à l'extrémité d'une aile dudit talon.

Avantageusement, également, la lèvre inférieure peut être de forme tubulaire avec un revêtement glissant fractionné lui assurant une meilleure souplesse sans nuire à ses qualités d'étanchéité.

Dans une réalisation de l'invention, celle-ci prévoit que les lèvres et le talon soient réalisés en des matériaux de dureté et d'élasticité différents, les lèvres étant plus déformables que le talon pour assurer une meilleure étanchéité, les zones de raccordement des lèvres au talon étant éventuellement encore plus facilement déformables élastiquement que les lèvres proprement dites.

Le glissant est avantageusement rapporté sur la lèvre inférieure lors de la fabrication du lécheur par coextrusion d'élastomères et/ou de plastomères, comme du caoutchouc ou du PVC ou d'un matériau thermoplastique.

En variante, la couche de glissant est réalisée par trempage ou pulvérisation, le cas échéant avec masques ou pré-traitement de zones ne devant pas être recouvertes pour l'obtention d'une couche homogène mais présentant des zones de plus faible épaisseur pour accroître la souplesse d'ensemble.

Suivant une autre caractéristique de l'invention, et dans un premier mode de mise en oeuvre, les deux lèvres sont réalisées dans des matériaux de même déformabilité.

Dans un autre mode de réalisation de l'invention, les deux lèvres sont réalisées dans des matériaux de déformabilités différentes.

D'autres caractéristiques et avantages de l'invention apparaîtront de la description qui suit, faite à titre d'exemple et en référence au dessin annexé dans lequel :
 – la figure 1 est une vue partielle illustrant une partie de carrosserie d'automobile ;
 – la figure 2 est une vue en coupe transversale d'un lécheur selon l'invention.

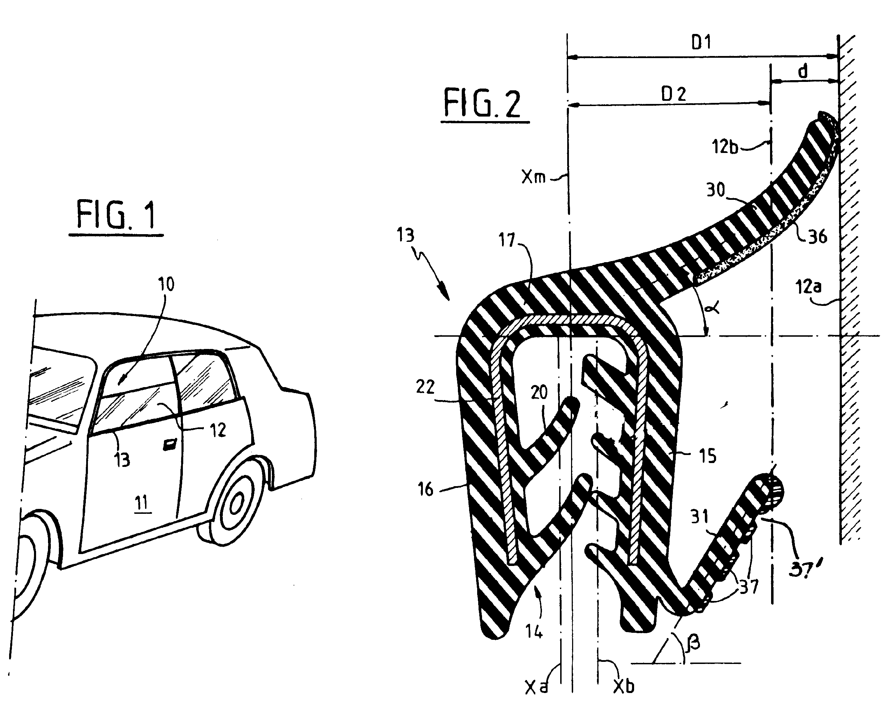

Celui-ci est prévu à la partie inférieure de la baie 10 d'une porte 11 d'automobile, propre à être fermée par une vitre ou glace coulissante 12, figure 1, ladite vitre ou glace étant guidée latéralement par des coulisses de glace, non représentées, et étant propre à coopérer avec une coulisse supérieure s'étendant sensiblement parallèlement au lécheur 13. Ce dernier comprend essentiellement une pince ou talon 14, à section droite générale en π, figure 2, à ailes 15 et 16 sensiblement parallèles réunies par une âme 17, les ailes 15 et 16 présentant sur leurs faces en regard, respectivement, des saillies ou nervures comme 20 et 21 de fixation sur le cadre ou châssis de la porte 11, non représenté. Dans la forme de réalisation décrite et illustrée, le talon 14 est armé par un profilé en U, 22, avantageusement métallique, par exemple en aluminium, et qui est noyé dans la masse du matériau constitutif du profil, ledit matériau pouvant être un matériau élastomère, comme un caoutchouc, un matériau plastomère comme du PVC, ou un matériau thermoplastique élastomère.

L'invention envisage également dans son cadre de réaliser le profil non pas en un seul matériau, mais en des matériaux différant entre eux par certaines de leurs propriétés, par exemple leur dureté, la pince ou talon 14 étant alors de préférence réalisé en un matériau de plus grande dureté que celui des lèvres d'étanchéité.

Selon l'invention, à la pince ou talon 14 sont associées deux lèvres d'étanchéité, 30 et 31, dont la première est reliée par sa base 32 à l'âme 17 du talon et dont la seconde est reliée par sa base 33 à l'extrémité de l'aile 15 dudit talon. La lèvre 30 dont l'extrémité libre et la face inférieure sont revêtues par flocage d'un revêtement souple 36 facilitant le glissement et retenant les poussières s'étend sensiblement orthogonalement à la glace 12, lorsque cette dernière n'obture pas la baie 10, et est d'une longueur telle que ledit revêtement 36 vienne au contact de la face 12$\underline{a}$ de la vitre ou glace 12 lorsque cette dernière obture partiellement ou totalement la baie 10, le plan moyen A de la lèvre 30 formant alors un angle α, petit, avec le plan moyen $\underline{B}$ de l'âme 17.

Sur la figure 2 les repères 12$\underline{a}$ et 12$\underline{b}$ se rapportent à la face de la vitre en regard du lécheur respectivement en position complètement baissée et en position complètement relevée, les distances D1 et D2, différant de l'écartement $\underline{d}$, représentant les distances de la vitre à l'axe X du talon, respectivement dans ces deux positions et les axes Xa et Xb indiquant les positions de l'axe du mécanisme d'entraînement correspondant aux positions 12$\underline{a}$ et 12$\underline{b}$, Xm représentant la position moyenne de cet axe. Dans le cas de vitres planes, la distance entre Xa et Xb est égale à la distance $\underline{d}$ entre les deux positions extrêmes de la vitre, représentée plane pour simplifier mais qui peut être également légèrement bombée.

La lèvre 31, dont l'extrémité libre et la face inférieure sont revêtues d'un glissant 37, à surface interrompue par des évidements 37' et qui est préférablement en matière plastique à faible coefficient de frottement comme par exemple un polyoléfine ou du polytétrafluoroéthylène, est d'une longueur et d'une position telles qu'elle ne vient en contact avec la vitre que lorsque la surface de celle-ci orientée vers le lécheur est dans la position 12b, c'est-à-dire lorsque la vitre est complètement relevée. Ainsi, dans cet exemple, la lèvre 31 est à la fois plus courte que la lèvre 30 et son axe moyen fait avec l'axe moyen B de l'âme du talon un angle β beaucoup plus fort que l'ange α de la lèvre supérieure 30. L'angle β et la longueur de la lèvre 31 sont choisis de manière à ce que la lèvre exerce sur la vitre une pression faible mais suffisante pour en assurer l'étanchéité lorsqu'elle est complètement relevée, sans que la lèvre ne risque d'entrer en contact avec la vitre dans toutes les autres positions de celle-ci.

Les lèvres 30 et 31 sont avantageusement, mais non exclusivement, réalisées dans un matériau plus souple que celui du talon, dont les griffes d'accrochage 20, 21 sont de préférence aussi réalisées dans un matériau plus souple que celui de son âme et de ses ailes 15 et 16.

Le corps du talon 14 est de préférence réalisé en un matériau de plus grande dureté que ses saillies ou nervures 20, 21 et que la partie active des lèvres qui doivent être suffisamment souples pour accommoder les éventuels défauts de planéité de la vitre ou pour tenir compte du bombé de celle-ci.

## Revendications

1. Lécheur de bas de glace mobile, notamment de porte d'automobile, comprenant un talon ou pince de fixation et de montage sur le cadre ou châssis de la porte et une première lèvre d'étanchéité (30) portée par ledit talon et propre à coopérer avec ladite glace ou vitre (12) dont la position varie, -par rapport à un plan de référence parallèle au plan de la porte-, lors du mouvement de ladite glace ou vitre, la première lèvre (30) étant revêtue sur sa partie venant en contact avec la vitre (12) lors du mouvement de cette dernière d'un revêtement (36) à faible coefficient de frottement, ainsi qu'une seconde lèvre (31) revêtue sur sa partie opératoire d'un revêtement glissant (37) et décalée par rapport à la première (30) vers l'extrémité non libre et non émergente de la glace ou vitre (12), caractérisé en ce que ladite seconde lèvre (31) est conformée et placée de manière telle qu'elle n'entre en contact avec la vitre ou glace (12) que lorsque celle-ci est complètement relevée, appuyant alors suffisamment sur ladite glace ou vitre (12) pour assurer une étanchéité satisfaisante, et en ce que le revêtement (36) de la première lèvre (30) est un revêtement relativement souple (36) déposé par flocage.

2. Lécheur selon la revendication 1, caractérisé en ce que ladite seconde lèvre (31) est plus courte que la première lèvre (30).

3. Lécheur selon la revendication 1, caractérisé en ce que ladite seconde lèvre (31) est orientée de manière à faire avec la direction perpendiculaire à la vitre (12) un angle (β) plus fort que celui que fait ladite première lèvre (30).

4. Lécheur selon la revendication 1, caractérisé en ce que ladite seconde lèvre est à la fois plus courte que la première lèvre (30) et plus inclinée que celle-ci relativement à la direction de la vitre (12).

5. Lécheur selon l'une quelconque des revendications précédentes, caractérisé en ce que ledit revêtement (37) de ladite seconde lèvre (31) est discontinu.

6. Lécheur selon l'une quelconque des revendications précédentes, caractérisé en ce que ladite seconde lèvre (31) est reliée audit talon (14) par une zone de plus grande élasticité que ladite seconde lèvre (31).

7. Lécheur selon l'une quelconque des revendications précédentes, caractérisé en ce que ladite première lèvre (30) est reliée audit talon (14) par une zone de plus grande élasticité que ladite première lèvre (30).

8. Lécheur selon l'une quelconque des revendications précédentes, caractérisé en ce que ladite couche de revêtement glissant (37) est réalisé en polytétra fluoroéthylène ou en polyoléfine.

9. Lécheur selon l'une quelconque des revendications précédentes, caractérisé en ce que ladite couche de revêtement glissant (37) est réalisée par coextrusion avec l'ensemble du lécheur.

10. Lécheur selon l'une quelconque des revendications précédentes, caractérisé en ce que ladite couche de revêtement glissant (37) est discontinue et est réalisée par trempage ou pulvérisation avec masque ou prétraitement des zones (37') ne devant pas être recouvertes.

## Patentansprüche

1. Unterer Abstreifer für bewegliche Scheiben, insbesondere von Kraftfahrzeugtüren mit einem Absatz oder Befestigungsund Montageklemmstück auf dem Rahmen oder dem Chassis der Tür und einer ersten Dichtungslippe (30), die von diesem Absatz getragen und so ausgebildet ist, daß sie mit diesem Glas oder der Scheibe (12), deren Stellung variiert - bezogen auf eine Bezugsebene parallel zur Ebene der Tür - bei der Bewegung dieses Glases oder dieser Scheibe zusammenwirkt, wobei die erste Lippe (30) auf ihrem in Kontakt mit der Scheibe (12) bei der Bewegung der letzteren in Kontakt kommenden Teil mit einem Überzug (36) mit geringem Reibungskoeffizienten überzogen ist, sowie einer zweiten Lippe (31), die auf ihrem Arbeitsteil mit einem Gleitüberzug (37) überzogen und bezüglich der ersten (30) gegen das nichtfreie und nicht hinausreichende Ende von Scheibe oder Glas (12) versetzt ist, dadurch gekennzeichnet, daß diese zweite Lippe (31) derart geformt und angeordnet ist, daß sie mit Scheibe oder Glas (12) erst dann in Kontakt tritt, wenn diese völlig angehoben ist und sich damit ausreichend gegen diese Scheibe oder dieses Glas (12) abstützt, um für eine ausreichende Dichtigkeit zu sorgen, und daß der Überzug (36) der ersten Lippe (30) ein relativ nachgiebiger vermittels Flockung abgeschiedener Überzug (36) ist.

2. Abstreifer nach Anspruch 1, dadurch gekennzeichnet, daß diese zweite Lippe (31) kürzer als die erste Lippe (30) ist.

3. Abstreifer nach Anspruch 1, dadurch gekennzeichnet, daß diese zweite Lippe (31) derart orientiert ist, daß sie mit der Richtung senkrecht zur Scheibe (12) einen Winkel (β) bildet, der größer als der der ersten Lippe (30) ist.

4. Abstreifer nach Anspruch 1, dadurch gekennzeichnet, daß diese zweite Lippe gleichzeitig kürzer als die erste Lippe (30) und stärker geneigt als diese relativ zur Richtung der Scheibe (12) ist.

5. Abstreifer nach einem der vorhergehenden Ansprüche, dadurch gekennzeichnet, daß dieser Überzug (37) der zweiten Lippe (31) diskontinuierlich ist.

6. Abstreifer nach einem der vorhergehenden Ansprüche, dadurch gekennzeichnet, daß diese zweite Lippe (31) mit dem Absatz (14) über eine Zone größerer Elastizität als diese zweite Lippe (31) verbunden ist.

7. Abstreifer nach einem der vorhergehenden Ansprüche, dadurch gekennzeichnet, daß diese erste Lippe (30) mit diesem Absatz (14) über eine Zone größerer Elastizität als diese erste Lippe (30) verbunden ist.

8. Abstreifer nach einem der vorhergehenden Ansprüche, dadurch gekennzeichnet, daß diese Schicht gleitfähigen Überzugs (37) aus Polytetrafluorethylen oder aus Polyolefin ausgeführt ist.

9. Abstreifer nach einem der vorhergehenden Ansprüche, dadurch gekennzeichnet, daß diese Schicht gleitfähigen Überzugs (37) durch Coextrusion mit der Abstreiferanordnung hergestellt ist.

10. Abstreifer nach einem der vorhergehenden Ansprüche, dadurch gekennzeichnet, daß diese Schicht mit dem gleitfähigen Überzug (37) diskontinuierlich ist und durch Tauchen oder Aufstäuben mit Maske oder Vorbehandlung der Zonen (37′), die nicht abgedeckt werden sollen, ausgeführt ist.

## Claims

1. Sealing strip for the bottom of sliding glass panes, particularly of a motor vehicle door, comprising a heel or clip for fixing and fitting to the frame or chassis of the door and a first sealing lip (30) carried by said heel and adapted to cooperate with said pane or window (12) of which the position varies - during the movement of said pane or window, the first lip (30) being coated over its portion coming into contact with the pane (12) during the movement of the pane, with a coating (36) with a low friction coefficient, as well as a second lip (31) coated on its operating portion with a sliding coating (37) and offset with respect to the first lip (30) towards the confined, non-emergent end of the pane or window (12), characterized in that said second lip (31) is shaped and positioned so that it only enters into contact with the pane or window (12) when the latter is completely raised, so that it then bears sufficiently against said pane or window (12) to provide satisfactory sealing, and in that the coating (36) of the first lip (30) is a relatively flexible coating deposited by flocking.

2. Sealing strip as claimed in Claim 1, characterized in that said second lip (31) is shorter than the first lip (30).

3. Sealing strip as claimed in Claim 1, characterized in that said second lip (31) is oriented so as to form with the direction perpendicular to the window (12) an angle (β) greater than that formed by said first lip (30).

4. Sealing strip as claimed in Claim 1, characterized in that said second lip is both shorter than the first lip (30) and more inclined than it with respect to the direction of the window (12).

5. Sealing strip as claimed in any one of the preceding claims, characterized in that said coating (37) of said second lip (31) is discontinuous.

6. Sealing strip as claimed in any one of the preceding claims, characterized in that said second lip (31) is connected to said heel (14) by a zone having greater elasticity than said second lip (31).

7. Sealing strip as claimed in any one of the preceding claims, characterized in that said first lip (30) is connected to said heel (14) by a zone of greater elasticity than said first lip (30).

8. Sealing strip as claimed in any one of the preceding claims, characterized in that said sliding coating layer (37) is formed from polytetrafluoroethylene or polyolefin.

9. Sealing strip as claimed in any one of the preceding claims, characterized in that said sliding coating layer (37) is formed by co-extrusion with the whole of the sealing strip.

10. Sealing strip as claimed in any one of the preceding claims, characterized in that said sliding coating layer (37) is discontinuous and is formed by dipping or spraying with masking or pre-treatment of the zones (37′) which do not have to be coated.

# FIG. 1

# FIG. 2

EP 0 349 389 B1